# EUROPÄISCHE PATENTSCHRIFT

(11) **EP 1 184 242 B1**
(45) Veröffentlichungstag und Bekanntmachung des Hinweises auf die Patenterteilung: **15.03.2006**
(21) Anmeldenummer: 01121019.2
(22) Anmeldetag: 31.08.2001
(51) Int. Cl.: B60S 5/06, B62B 3/06, B60K 1/04

(54) **Flurförderzeug mit einem Batterieblock**
Industrial truck with a battery pack
Chariot de manutention avec un bloc de batterie

(30) Priorität: 01.09.2000 DE 10043186
(43) Veröffentlichungstag der Anmeldung: 06.03.2002
(73) Patentinhaber: OM Carrelli Elevatori S.p.A., 20020 Lainate MI (IT)
(72) Erfinder: Prinz, Eugen, 72762 Reutlingen (DE)
(74) Vertreter: Lang, Michael

(56) Entgegenhaltungen:
- FR-A- 1 507 570

## Beschreibung

Die Erfindung betrifft ein Flurförderzeug, insbesondere Fahrersitzhubwagen oder Fahrerstandhubwagen, mit einem Batterieblock und einem mittels einer Hubvorrichtung anhebbaren Lastteil, wobei der Batterieblock durch mindestens eine Rolle zumindest geringfügig anhebbar ist und wobei die Rolle mittels der Hubvorrichtung anhebbar ist.

Flurförderzeuge der genannten Art besitzen einen Antriebsteil, in dem sich die Antriebsaggregate, ein Antriebsrad und Bedienelemente des Flurförderzeugs und gegebenenfalls ein Fahrerplatz befinden, sowie einen Lastteil mit einer Lastaufnahmevorrichtung, der relativ zu dem Antriebsteil anhebbar ist. Der Lastteil steht in der Regel mittels Lastrollen auf einer Fahrbahn auf, die während einer Hubbewegung des Lastteils ihren vertikalen Abstand zu einem Lastrahmen verändern und dadurch die Hubbewegung unterstützen.

In dem Antriebsteil des Flurförderzeugs ist ein Batterieblock angeordnet, der die Aggregate des Flurförderzeugs mit elektrischer Energie versorgt Zum Wechseln des Batterieblocks kann dieser in seitlicher Richtung aus dem Antriebsteil bewegt werden. Um das Verschieben des Batterieblocks in horizontaler Richtung zu erleichtern, ist es üblich, in dem Antriebsteil, unterhalb des Batterieblocks eine Rollenbahn vorzusehen, auf welcher der Batterieblock bewegt werden kann.

Um ein unbeabsichtigtes Bewegen des Batterieblocks auf der Rollenbahn zu verhindern, ist es bekannt, die Rollen der Rollenbahn vertikal beweglich auszuführen. Bei dieser Anordnung steht der Batterieblock während des normalen Betriebs fest auf einer Standfläche auf. Zum Wechseln des Batterieblocks werden die Rollen so weit angehoben, dass sie die Gewichtskraft des Batterieblocks tragen. Bei einer bekannten Anordnung erfolgt das Anheben der Rollen über eine komplizierte Kinematik über Bowdenzüge und Keile mittels einer von der Hubvorrichtung des Lastteils erzeugten Kraft. Die Hubvorrichtung umfasst in der Regel mindestens einen hydraulischen Hubzylinder, kann jedoch auch mit elektrischen oder anderen Stellgliedem ausgeführt sein.

Der Erfindung liegt daher die Aufgabe zugrunde, ein Flurförderzeug der eingangs genannten Art zur Verfügung zu stellen, bei dem der Batterieblock mittels mindestens einer Rolle mit einer einfachen Vorrichtung anhebbar ist.

Diese Aufgabe wird erfindungsgemäß dadurch gelüst, dass für den Lastteil eine erste obere Endstellung ansteuerbar ist, bei welcher der Batterieblock nicht angehoben ist, und dass für den Lastteil eine zweite obere Endstellung ansteuerbar ist, bei welcher der Batterieblock mit der Rolle angehoben ist Die erste obere Endstellung des Lastteils wird während des normalen Betriebs des Flurförderzeugs zum Handhaben von Lasten regelmäßig angesteuert. Wie bei gattungsgemäßen Flurförderzeugen üblich, entspricht diese erste obere Endstellung einer Hubhöhe von ca. 110 bis 150 Millimetem. Zum Wechseln des Batterieblocks wird die Hubhöhe auf die zweite obere Endstellung eingestellt, die ca. 5 bis 30 Millimeter höher ist, als die erste obere Endstellung. Durch das Anheben des Lastteils bis zur zweiten oberen Endstellung werden erfindungsgemäß auch die Rollen vertikal nach oben bewegt, so dass der Batterieblock durch die Rollen geringfügig angehoben wird. Anschließend kann der Batterieblock zum Zweck des Batteriewechsels mit geringem Kraftaufwand auf den Rollen verschoben werden. Die erfindungsgemäße Anordnung kann bei allen gattungsgemäßen Typen von Flurförderzeugen, insbesondere bei Fahrersitz- oder Fahrerstandhubwagen mit oder ohne Hubmast, bei deichsetgeführten Hoch- oder Niederhubwagen oder bei Kommissionierfahrzeugen eingesetzt werden.

Zweckmäßigerweise ist im Bereich einer Bedienanordnung ein Bedienelement für die Hubvorrichtung angeordnet, wobei mittels dieses Bedienelements die erste obere Endstellung ansteuerbar ist Die Bedienanordnung umfasst die für den Betrieb des Flurförderzeugs wesentlichen Bedienelemente, insbesondere für die Hubvorrichtung, den Fahrantrieb und für eine Lenkvorrichtung. Die Bedienanordnung ist bei Fahrersitz- oder Fahrerstandhubwagen häufig als Bedientableau oder als Multifunktionshebel ausgeführt, bei deichselgeführten Hubwagen befindet sich die Bedienanordnung an einem Deichselkopf.

Vorteilhaft ist es, wenn ein Zusatz-Bedienelement für die Hubvorrichtung vorgesehen ist, wobei mittels des Zusatz-Bedienelements die zweite obere Endstellung ansteuerbar ist. Durch die Ansteuerung der ersten und der zweiten oberen Endstellung mit unterschiedlichen Bedienelementen können Fehlbedienungen vermieden werden.

Hierfür ist es insbesondere wichtig, dass mit dem Bedienelement für die erste obere Endstellung die zweite obere Endstellung nicht ansteuerbar ist

Zur Vermeidung von Fehlbedienung ist das Zusatz-Bedienelement darüber hinaus von der Bedienanordnung beabstandet angeordnet.

Eine besonders sinnfällige Anordnung liegt vor, wenn das Zusatz-Bedienelement unterhalb einer Haube für den Batterieblock angeordnet ist Das Zusatz-Bedienelement kann also nur bei geöffneter Haube betätigt werden. Durch das Öffnen der Haube kann gleichzeitig die Zugänglichkeit der Bedienanordnung erschwert oder deren Funktionsweise eingeschränkt werden.

Gemäß einer zweckmäßigen Weiterbildung der Erfindung steht mit der Haube eine Spannvorrichtung in Wirkverbindung, die bei geschlossener Haube den Batterieblock gegenüber einem Rahmen des Flurförderzeugs verspannt. Durch das Öffnen der Haube wird automatisch die Verspannung des Batterieblocks aufgehoben, so dass dieser durch die vertikal beweglichen Rollen angehoben werden kann.

Gemäß einer besonders vorteilhaften Ausführungsform der Erfindung ist ein elektrisches Schaltelement vorgesehen, das bei Erreichen der ersten oberen Endstellung seine Schaltstellung ändert. Das Erreichen der ersten oberen Endstellung wird somit durch das Schaltelement signalisiert Wenn die Hubvorrichtung mittels des Bedienelements zum Ansteuern der ersten oberen Endstellung betätigt wurde, wird daraufhin die Hubbewegung durch eine elektrische Steuerung automatisch abgeschaltet.

Ebenso vorteilhaft ist es bei einer Ausführung, bei der der Lastteil mittels mindestens eines hydraulischen Hubzylinders anhebbar ist, wenn der Hubzylinder bei in der zweiten oberen Endstellung befindlichem Lastteil einen vollständig eingefahrenen oder vollständig ausgefahrenen Kolben aufweist Die zweite obere Endstellung ist somit durch einen mechanischen Endanschlag des Hubzylinders definiert.

Gemäß einer einfachen Ausgestaltung der Erfindung ist die mindestens eine Rolle direkt oder indirekt an dem Lastteil gelagert. Die Rolle ist somit relativ zu dem Lastteil nicht höhenbeweglich.

In einer zweckmäßigen Weiterbildung ist mindestens eine Führungsrolle vorgesehen, die zur Führung einer Seitenwand des Batterieblocks vorgesehen ist. Während des Wechselns des Batterieblocks ist dieser in dem Flurförderzeug durch die Führungsrollen auch in seitlicher Richtung geführt. Dies ist insbesondere dann von Bedeutung, wenn die unterhalb des Batteriebfocks angeordneten Rollen seitlich des Schwerpunkts des Batterieblocks angeordnet sind.

Gemäß einer üblichen Ausführungsform ist der angehobene Batterieblock relativ zu einem Rahmen des Flurförderzeugs in horizontaler Richtung, vorzugsweise in seitlicher Richtung verschiebbar.

Eine besonders sichere Anordnung liegt vor, wenn bei einem höchstens bis zur ersten oberen Endstellung angehobenem Lastteil der Batterieblock an einem Rahmen des Flurförderzeugs in horizontaler Richtung formschlüssig festgelegt ist Ein seitliches Verrutschen des Batterieblocks ist hierdurch während des normalen Betriebs des Flurförderzeugs sicher verhindert Mittels der anhebbaren Rollen kann der Batterieblock aus dieser formschlüssigen Festlegung gehoben werden und ist anschließend auf den Rollen in horizontaler Richtung verschiebbar.

Weitere Vorteile und Ausgestaltungen der Erfindung werden anhand des in den schematischen Figuren dargestellten Ausführungsbeispiels näher erläutert: Dabei zeigt
- Figur 1: ein erfindungsgemäßes Flurförderzeug mit abgesenktem Lastteil,
- Figur 2: das Flurförderzeug mit in der ersten oberen Endstellung befindlichem Lastteil,
- Figur 3: das Flurförderzeug mit in der zweiten oberen Endstellung befindlichem Lastteil.

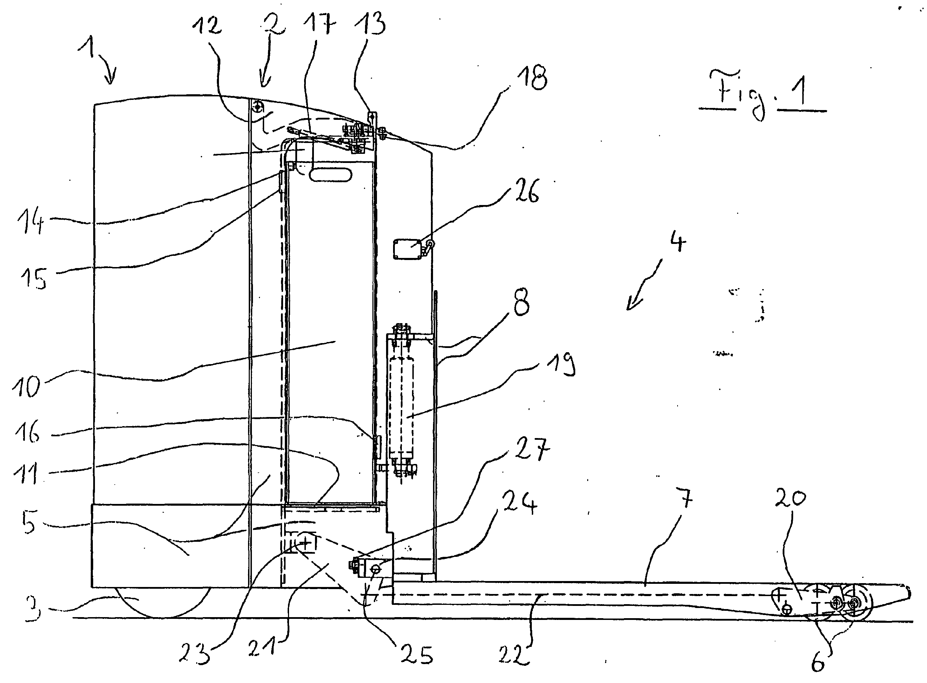

Figur 1 zeigt als erfindungsgemäßes Flurförderzeug eine Fahrersitzhubwagen, bei dem der Fahrer in einem in dieser Ansicht von einem Gehäuseteil verdeckten Fahrerplatz 1 quer zur Längsrichtung des Flurförderzeugs orientiert ist Der Fahrerplatz 1 ist Bestandteil eines Antriebsteils 2 des Flurförderzeugs, der unter anderem verschiedene Aggregate, ein Antriebsrad 3 und einen tragenden Rahmen 5 umfasst: Ein Batterieblock 9 steht auf dem Rahmen 5 des Antriebsteils 2 auf und weist an seiner Unterseite einen Absatz 11 auf, mit dem er an dem Rahmen 5 in horizontaler Richtung formschlüssig festgelegt ist. Oberhalb des Batterieblocks 10 ist an dem Antriebsteil 2 eine Haube 12 angeordnet, die in der dargestellten geschlossenen Position den Batterieblock 10 vor Zugriffen schützt. Die Haube 12 ist mittels eines Verschlusses 13 verriegelt. Eine mit der Haube 12 verbundene Spannvorrichtung 14 verspannt den Batterieblock 10 gegen an dem Antriebsteil 2 angeordnete obere Führungsrollen 15, so dass während des Betriebs des Flurförderzeugs keine Relativbewegung zwischen dem Batterieblock 10 und dem Antriebsteil 2 stattfindet. Die genannten oberen Führungsrollen 15 sowie die unteren Führungsrollen 16 führen den Batterieblock 10 während eines Batteriewechselvorgangs und verhindem ein Schleifen des Batterieblocks 10 an dem Antriebsteil 2. Ein Öffnen der Haube 12 wird mittels einer Gasfeder 17 unterstützt, die die Gewichtskräfte der Haube 12 teilweise abstützt und gleichzeitig dessen Bewegung dämpft. An der Unterseite der Haube 12 befindet sich ein Zusatz-Bedienelement 18 für eine Hubvorrichtung, die vor einem Wechseln des Batterieblocks betätigt werden muss.

In der in Fig. 1 dargestellten Betriebssituation ist ein Lastteil 4 des Flurförderzeugs vollständig abgesenkt Der Lastteil 4 umfasst auf der Fahrbahn aufstehende Lastrollen 6, eine Gabel bildende Lastarme 7 und einen Lastrahmen 8. Die zu einem Anheben des Lastteils 4 erforderliche Kraft wird mittels eines hydraulischen Hubzylinders 19 erzeugt, der mit einen Zylinderrohr an einem Bauteil des Antriebsteils 2 und mit einem Kolben an dem Lastrahmen 8 befestigt ist Die vertikale Position der Lastrollen 6 gegenüber den Lastarmen 7 wird bei einem Anheben des Lastteils 4 automatisch verändert, indem eine die Lastrollen 6 tragende Lastrollengabel 20 in bekannter Weise mittels eines Winkelhebels 21 und einer schematisch angedeuteten Stange 22 geschwenkt wird. Der Winkelhebel 21 ist an einem ersten Drehpunkt 23 mit dem Antriebsteil 2, an einem zweiten Drehpunkt 24 mit dem Lastteil 4 und an einem dritten Drehpunkt 25 mit der Stange 22 verbunden. Ein an dem Antriebsteil 2 befestigtes, als Mikroschalter ausgeführtes Schaltelement 26 wird von dem Lastrahmen 8 betätigt, wenn der Lastteil 4 bis zu einer ersten oberen Endstellung angehoben ist. Weiterhin sind an dem Lastteil 4 Rollen 27 befestigt, die gemeinsam mit dem Lastteil angehoben werden und ab einer bestimmten Hubhöhe den Batterieblock 10 mit anheben.

Um den Lastteil 4 während des Betriebs des Flurförderzeugs, z.B. zum Transportieren von Lasten anzuheben, wird von dem Fahrer ein nicht dargestelltes Bedienelement für die Hubvorrichtung betätigt Der Kolben des Hubzylinders 19 wird dabei ausgefahren und hebt den Lastteil 4 an, bis das Bedienelement wieder losgelassen wird oder das Schaltelement 26 betätigt ist, nachdem die erste obere Endstellung der Hubvorrichtung erreicht ist.

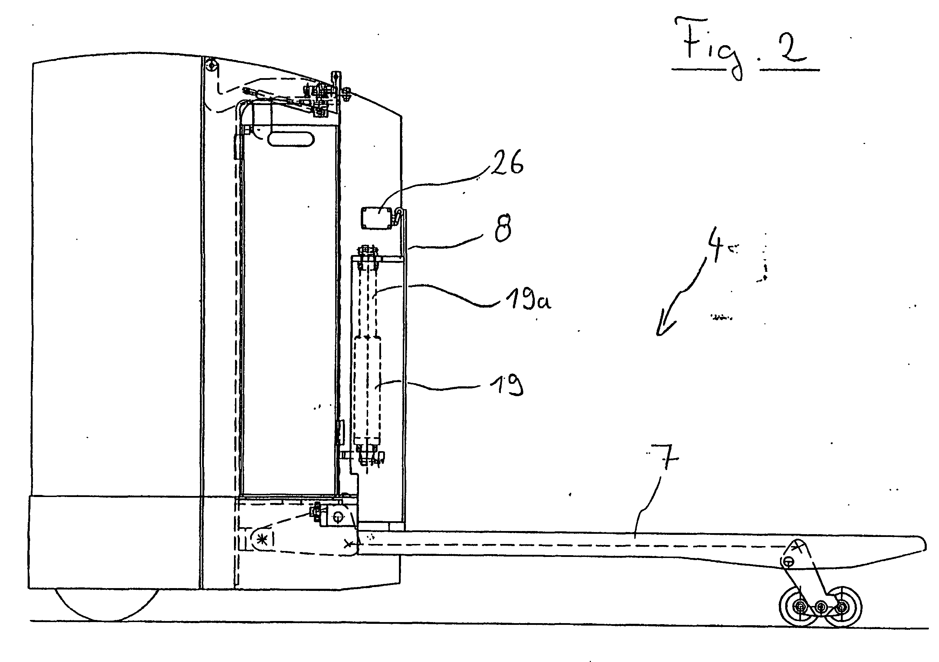

Figur 2 zeigt das Flurförderzeug gemäß Fig. 1 mit in der ersten oberen Endstellung befindlichem Lastaufnahmemittel. Zu erkennen ist der aus dem Hubzylinder 19 ausgefahrene Kolben 19a, mit dem der Lastteil 4 mit dem Lastrahmen 8 und den Lastarmen 7 angehoben wurde. Das Schaltelement 26 ist durch den Lastrahmen 8 betätigt, wodurch die Hubbewegung durch eine nicht dargestellte elektrische Steuerung des Flurförderzeugs gestoppt wurde. Die Rollen 27 befinden sich knapp unterhalb des Batterieblocks 10, so dass dessen Position in der dargestellten ersten oberen Endstellung des Lastteils 4 nicht beeinflusst wird.

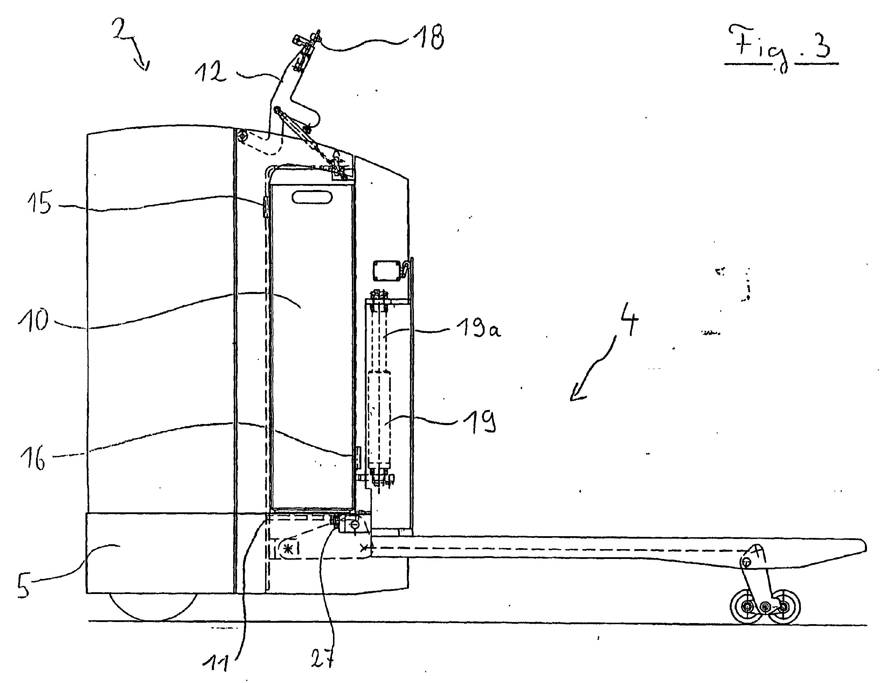

Figur 3 zeigt das Flurförderzeug mit in der zweiten oberen Endstellung befindlichem Lastteil 4. Um diese Position des Lastteils 4 zu erreichen, muss ausgehend von einer Betriebssituation gemäß Fig. 1 oder 2 zunächst die Haube 12 des Batterieblocks 10 geöffnet werden. Anschließend kann das Zusatz-Bedienelement 18 betätigt werden, worauf der Kolben 19a des Hubzylinders 19 vollständig nach oben ausgefahren wird. Hierdurch werden der Lastteil 4 in die dargestellte zweite obere Endstellung bewegt und die an dem Lastteil 4 gelagerten Rollen 27 so weit angehoben, dass sie mit dem Batterieblock 10 in Kontakt treten und diesen mit anheben.

Die formschlüssige Verbindung des Absatzes 11 des Batterieblocks 10 mit dem Rahmen 5 des Antriebsteils 2 wird dadurch aufgehoben. Der Batterieblock 10 kann dadurch auf den Rollen 27 in Querrichtung des Flurförderzeugs, in der vorliegenden Darstellung also senkrecht zur Zeichenebene, verschoben werden. Die seitliche Führung des Batterieblocks 10 erfolgt dabei mittels der Führungsrollen 15, 16. Die in der Höhe versetzte Anordnung der Führungsrollen 15 und 16 ergibt sich aus der außermittigen Anordnung der Rollen 27 und verhindert ein Kippen des Batterieblocks 10 im Gegenuhrzeigersinn.

Damit mit den Rollen 27 der Batterieblock 10 auf der gesamten Länge abgestützt werden kann, sind mehrere, im vorliegenden Ausführungsbeispiel vier Rollen 27 hintereinander angeordnet. Die vier Rollen 27 sind gleichmäßig über die Breite des Flurförderzeugs verteilt In der in den Figuren 1 - 3 dargestellten Perspektive verdecken sich die Rollen 27 gegenseitig, so dass nur eine einzige Rolle 27 zu erkennen ist Gleiches gilt für die im vorliegenden Ausführungsbeispiel vorgesehenen zwei Hubzylinder 19, die sich gegenüberliegend an den Seiten des Flurförderzeugs befinden.

## Patentansprüche

1. Flurförderzeug, insbesondere Fahrersitzhubwagen oder Fahrerstandhubwagen, mit einem Batterieblock (10) und einem mittels einer Hubvorrichtung anhebbaren Lastteil (4), wobei der Batterieblock (10) durch mindestens eine Rolle (27) zumindest geringfügig anhebbar ist und wobei die Rolle (27) mittels der Hubvorrichtung anhebbar ist, **dadurch gekennzeichnet, dass** für den Lastteil (4) eine erste obere Endstellung ansteuerbar ist, bei welcher der Batterieblock (10) nicht angehoben ist, und dass Würden Lastteil (4) eine zweite obere Endstellung ansteuerbar ist, bei welcher der Batterieblock (10) mit der Rolle (27) angehoben ist.

2. Flurförderzeug nach Anspruch 1, **dadurch gekennzeichnet**, das im Bereich einer Bedienanordnung ein Bedienelement für die Hubvorrichtung angeordnet ist, wobei mittels dieses Bedienelements die erste obere Endstellung ansteuerbar ist.

3. Flurförderzeug nach Anspruch 1 oder 2, **dadurch gekennzeichnet, dass** ein Zusatz-Bedienelement (18) für die Hubvorrichtung vorgesehen ist, wobei mittels des Zusatz-Bedienelements (18) die zweite obere Endstellung ansteuerbar ist.

4. Flurförderzeug nach Anspruch 3, **dadurch gekennzeichnet, dass** das Zusatz-Bedienelement (18) von der Bedienanordnung beabstandet angeordnet ist

5. Flurförderzeug nach Anspruch 3 oder 4, **dadurch gekennzeichnet, dass** das Zusatz-Bedienelement (18) unterhalb einer Haube (12) für den Batterieblock (10) angeordnet ist

6. Flurförderzeug nach einem der Ansprüche 1 bis 5, **dadurch gekennzeichnet, dass** mit der Haube (12) eine Spannvorrichtung in Wirkverbindung steht, die bei geschlossener Haube (12) den Batterieblock (10) gegenüber einem Rahmen (5) des Flurförderzeugs verspannt

7. Flurförderzeug nach einem der Ansprüche 1 bis 6, **dadurch gekennzeichnet, dass** ein elektrisches Schaltelement (26) vorgesehen ist, das bei Erreichen der ersten oberen Endstellung seine Schaltstellung ändert.

8. Flurförderzeug nach einem der Ansprüche 1 bis 7, **dadurch gekennzeichnet, dass** der Lastteil (4) mittels mindestens eines hydraulischen Hubzylinders (19) anhebbar ist, wobei der Hubzylinder (19) bei in der zweiten oberen Endstellung befindlichem Lastteil (4) einen vollständig eingefahrenen oder vollständig ausgefahrenen Kolben (19a) aufweist.

9. Flurförderzeug nach einem der Ansprüche 1 bis 8, **dadurch gekennzeichnet, dass** die mindestens eine Rolle (27) direkt oder indirekt an dem Lastteil (4) gelagert ist.

10. Flurförderzeug nach einem der Ansprüche 1 bis 9, **dadurch gekennzeichnet, dass** mindestens eine Führungsrolle (15, 16) vorgesehen ist, die zur Führung einer Seitenwand des Batterieblocks (10) vorgesehen ist.

11. Flurförderzeug nach einem der Ansprüche 1 bis 10, **dadurch gekennzeichnet, dass** der angehobene Batterieblock (10) relativ zu einem Rahmen (5) des Flurförderzeugs in horizontaler Richtung, vorzugsweise in seitlicher Richtung verschiebbar ist

12. Flurförderzeug nach einem der Ansprüche 1 bis 11, **dadurch gekennzeichnet, dass** bei einem höchstens bis zur ersten oberen Endstellung angehobenem Lastteil (4) der Batterieblock (10) an einem Rahmen (5) des Flurförderzeugs in horizontaler Richtung formschlüssig festgelegt ist

## Claims

1. Industrial truck, in particular a driver's seat lift truck or driver's platform lift truck, having a battery block (10) and a load part (4), which can be lifted by means of a lifting apparatus, it being possible for the battery block (10) to be lifted at least slightly by at least one roller (27), and it being possible for the roller (27) to be lifted by means of the lifting apparatus, **characterized in that** a first upper end position can be driven for the load part (4), in which end position the battery block (10) is not lifted, and **in that** a second upper end position can be driven for the load part (4), in which end position the battery block (10) is lifted using the roller (27).

2. Industrial truck according to Claim 1, **characterized in that** an operating element for the lifting apparatus is arranged in the region of an operating arrangement, it being possible for the first upper end position to be driven by means of this operating element.

3. Industrial truck according to Claim 1 or 2, **characterized in that** an additional operating element (18) for the lifting apparatus is provided, it being possible for the second upper end position to be driven by means of the additional operating element (18).

4. Industrial truck according to Claim 3, **characterized in that** the additional operating element (18) is arranged such that it is spaced apart from the operating arrangement.

5. Industrial truck according to Claim 3 or 4, **characterized in that** the additional operating element (18) is arranged below a cover (12) for the battery block (10).

6. Industrial truck according to one of Claims 1 to 5, **characterized in that** a clamping apparatus is operatively connected to the cover (12), said clamping apparatus clamping the battery block (10) with respect to a frame (5) of the industrial truck when the cover (12) is closed.

7. Industrial truck according to one of Claims 1 to 6, **characterized in that** an electrical switching element (26) is provided which changes its switching position when the first upper end position is reached.

8. Industrial truck according to one of Claims 1 to 7, **characterized in that** the load part (4) can be lifted by means of at least one hydraulic lifting cylinder (19), the lifting cylinder (19) having a completely withdrawn or completely extended piston (19a) when the load part (4) is located in the second upper end position.

9. Industrial truck according to one of Claims 1 to 8, **characterized in that** the at least one roller (27) is mounted directly or indirectly on the load part (4).

10. Industrial truck according to one of Claims 1 to 9, **characterized in that** at least one guide roller (15, 16) is provided which is provided for the purpose of guiding a side wall of the battery block (10).

11. Industrial truck according to one of Claims 1 to 10, **characterized in that** the lifted battery block (10) can be displaced in the horizontal direction, preferably in the lateral direction, in relation to a frame (5) of the industrial truck.

12. Industrial truck according to one of Claims 1 to 11, **characterized in that**, in the case of a load part (4) which has been lifted at most up to the first upper end position, the battery block (10) is fixed to a frame (5) of the industrial truck in an interlocking manner and in the horizontal direction.

## Revendications

1. Chariot de manutention, notamment chariot de manutention à conducteur assis ou à conducteur debout, comprenant un bloc de batterie (10) et une partie de charge (4) pouvant être soulevée au moyen d'un dispositif de levage, le bloc de batterie (10) pouvant être au moins légèrement soulevé par au moins un rouleau (27), et le rouleau (27) pouvant être soulevé au moyen du dispositif de levage, **caractérisé en ce que** pour la partie de charge (4), une première position terminale supérieure peut être commandée, dans laquelle le bloc de batterie (10) n'est pas soulevé, et **en ce que** pour la partie de charge (4), une deuxième position terminale supérieure peut être commandée, dans laquelle le bloc de batterie (10) est soulevé avec le rouleau (27).

2. Chariot de manutention selon la revendication 1, **caractérisé en ce qu'**un élément de commande pour le dispositif de levage est disposé dans la région d'un agencement de commande, cet élément de commande permettant de commander la première position terminale supérieure.

3. Chariot de manutention selon la revendication 1 ou 2, **caractérisé en ce que** l'on prévoit un élément de commande supplémentaire (18) pour le dispositif de levage, l'élément de commande supplémentaire (18) permettant de commander la deuxième position terminale supérieure.

4. Chariot de manutention selon la revendication 3, **caractérisé en ce que** l'élément de commande supplémentaire (18) est espacé de l'agencement de commande.

5. Chariot de manutention selon la revendication 3 ou 4, **caractérisé en ce que** l'élément de commande supplémentaire (18) est disposé sous un capot (12) pour un bloc de batterie (10).

6. Chariot de manutention selon l'une quelconque des revendications 1 à 5, **caractérisé en ce qu'**un dispositif de serrage coopère fonctionnellement avec le capot (12), en serrant le bloc de batterie (10) par rapport à un châssis (5) du chariot de manutention lorsque le capot (12) est fermé.

7. Chariot de manutention selon l'une quelconque des revendications 1 à 6, **caractérisé en ce que** l'on prévoit un élément de commutation (26) qui modifie sa position de commutation lorsque la première position terminale supérieure est atteinte.

8. Chariot de manutention selon l'une quelconque des revendications 1 à 7, **caractérisé en ce que** la partie de charge (4) peut être soulevée au moyen d'au moins un cylindre de levage hydraulique (19), le cylindre de levage (19) présentant un piston (19a) complètement rentré ou complètement sorti lorsque la partie de charge (4) se trouve dans la deuxième position terminale supérieure.

9. Chariot de manutention selon l'une quelconque des revendications 1 à 8, **caractérisé en ce que** l'au moins un rouleau (27) est monté directement ou indirectement sur la partie de charge (4).

10. Chariot de manutention selon l'une quelconque des revendications 1 à 9, **caractérisé en ce que** l'on prévoit au moins un rouleau de guidage (15, 16) qui est prévu pour guider une paroi latérale du bloc de batterie (10).

11. Chariot de manutention selon l'une quelconque des revendications 1 à 10, **caractérisé en ce que** le bloc de batterie soulevé (10) peut être déplacé par rapport à un châssis (5) du chariot de manutention dans la direction horizontale, de préférence dans la direction latérale.

12. Chariot de manutention selon l'une quelconque des revendications 1 à 11, **caractérisé en ce que** le bloc de batterie (10) est fixé sur un châssis (5) du chariot de manutention par engagement positif dans la direction horizontale, lorsqu'une partie de charge (4) est soulevée au maximum jusqu'à la première position terminale supérieure.
